# FASCICULE DE BREVET EUROPEEN

(11) **EP 1 253 570 B1**
(45) Date de publication et mention de la délivrance du brevet: **02.11.2011**
(21) Numéro de dépôt: 02290981.6
(22) Date de dépôt: 18.04.2002
(51) Int. Cl.: G08G 1/0968, G01C 21/34

(54) **Procédé d'amélioration de la précision du guidage d'un véhicule**
Verfahren zur Verbesserung der Präzisionsführung in einem Fahrzeug
Method to improve the precision in the guidance of a vehicle

(30) Priorité: 27.04.2001 FR 0105714
(43) Date de publication de la demande: 30.10.2002
(73) Titulaire: Renault s.a.s., 92100 Boulogne Billancourt (FR)
(72) Inventeur: Gel, Nicolas, 9213 Issy les Moulineaux (FR); Rimlinger, R-mi, 78280 Guyancourt (FR)

(56) Documents cités:
- WO-A-99/09374
- US-A- 5 184 123
- US-A- 5 410 486
- US-A- 5 737 225
- US-B1- 6 212 470

## Description

La présente invention se rapporte à un procédé d'amélioration de la précision du guidage d'un véhicule par un dispositif du type à terminal embarqué et à serveur débarqué, à un dispositif de mise en oeuvre de ce procédé et à un véhicule utilisant ce dispositif.

On connaît de la technique antérieure, et notamment du document WO 99 09374, un système de guidage d'un véhicule du type à terminal embarqué et à serveur débarqué.

Bien qu'il présente de nombreux avantages, un tel système présente cependant comme inconvénient de fournir des réponses de guidage entachées d'une imprécision structurelle.

En effet, entre le moment où le terminal embarqué formule une requête de guidage vers le serveur débarqué et le moment où le terminal embarqué reçoit une réponse de guidage en provenance du serveur débarqué, le véhicule s'est déplacé.

Il en résulte que les informations contenues par la réponse de guidage ne correspondent en général pas exactement à la position actuelle du véhicule, ce qui peut induire l'utilisateur en erreur.

La présente invention a pour but de remédier à cet inconvénient.

On atteint ce but de l'invention avec un procédé d'amélioration de la précision du guidage d'un véhicule par un système du type à terminal embarqué et à serveur débarqué, remarquable en ce qu'on estime le temps de traitement d'une requête de guidage émanant dudit terminal embarqué, en ce qu'on estime une position dudit véhicule correspondant au déplacement de ce véhicule pendant ledit temps de traitement, et en ce qu'on élabore dans ledit serveur débarqué une réponse de guidage sur la base de ladite position estimée.

Grâce à ces caractéristiques, on peut corriger l'erreur due au fait que le véhicule se déplace entre le moment où le terminal embarqué élabore une requête de guidage et le moment où ce terminal embarqué reçoit une réponse de guidage.

On obtient de la sorte une meilleure précision de guidage.

Suivant d'autres caractéristiques du procédé selon l'invention
- on estime ladite position au moyen d'un calcul de probabilité,
- on effectue ledit calcul de probabilité à partir d'au moins l'un des critères choisis dans le groupe comprenant un critère de vitesse, un critère de direction, un critère de nature de tronçon routier et un critère de propagation de probabilité,
- on prend on compte, pour effectuer ledit calcul de probabilité, des données représentatives du comportement d'un utilisateur,
- on compare ladite position estimée à la position actuelle dudit véhicule, et on recalcule ladite position estimée si sa distance par rapport à ladite position actuelle dépasse un seuil prédéterminé.

La présente invention se rapporte également à un dispositif de mise en oeuvre d'un procédé conforme à ce qui précède, comprenant a) un terminal embarqué à bord dudit véhicule, susceptible d'élaborer une requête de guidage, b) des moyens embarqués d'indication de la position dudit véhicule interfacés avec ledit terminal embarqué, c) au moins un serveur débarqué, susceptible d'élaborer une réponse de guidage à partir du report d'une position dudit véhicule sur une carte extraite d'une base de données routière, et e) des moyens pour échanger des données entre ledit terminal embarqué et ledit serveur débarqué,
remarquable en ce qu'il comprend en outre des moyens pour estimer le temps de traitement de ladite requête de guidage, pour estimer la position dudit véhicule correspondant au déplacement de ce véhicule pendant ledit temps de traitement, et pour élaborer ladite réponse de guidage sur la base de ladite position estimée.

Suivant d'autres caractéristiques du dispositif selon l'invention :
- lesdits moyens embarqués d'indication de position comprennent un récepteur GPS,
- ledit dispositif comprend un gyromètre interfacé avec ledit terminal embarqué,
- ledit terminal embarqué comprend des moyens d'interface avec des équipements dudit véhicule,
- ledit serveur débarqué a en outre accès à une base de données clients,
- ledit terminal embarqué et ledit serveur débarqué comprennent des horloges synchronisées,
- lesdits moyens d'échanges de données sont adaptés pour fonctionner avec un réseau de téléphonie cellulaire.

La présente invention se rapporte également à un véhicule automobile, remarquable en ce qu'il utilise un dispositif conforme à ce qui précède.

D'autres caractéristiques et avantages de la présente invention apparaîtront à la lecture de la description qui va suivre et à l'examen du dessin annexé, dans lequel :
- la figure 1 représente de manière schématique le dispositif selon l'invention,
- la figure 2 est une vue schématique d'une partie d'un réseau routier servant à illustrer le procédé selon l'invention.

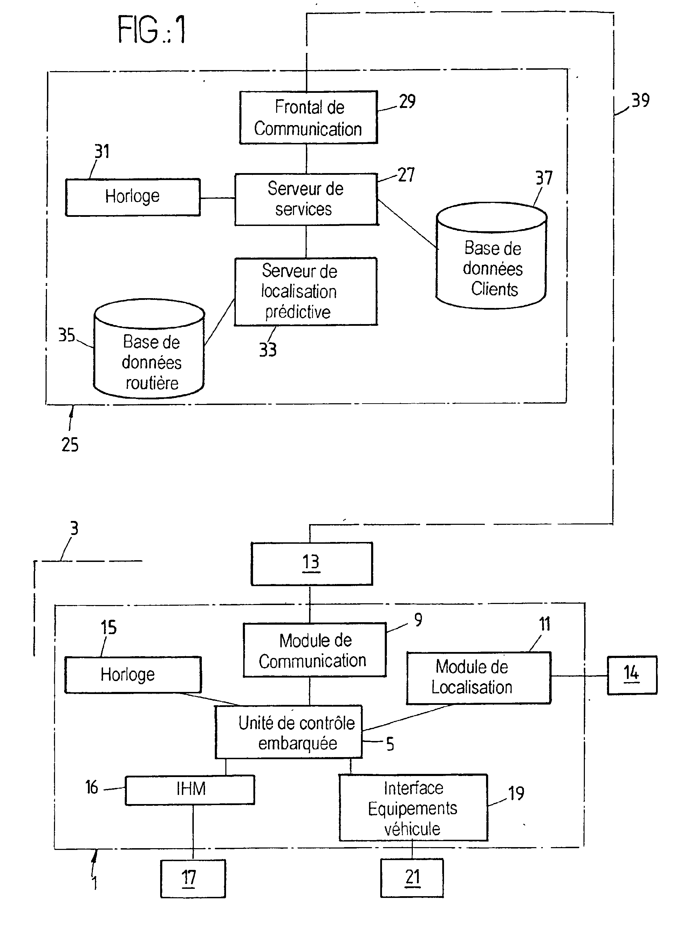

Comme cela apparaît la figure 1, le dispositif selon l'invention comprend tout d'abord un terminal 1 destiné à être embarqué à bord d'un véhicule automobile 3.

Ce terminal embarqué 1 comprend une unité de contrôle 5 reliée à un module de communication 9 et à un module de localisation 11 destinés à être reliés respectivement à un modem 13 et à un GPS et/ou à un gyromètre 14.

On rappelle ici que le sigle GPS désigne un système de positionnement à trois dimensions (Global Positioning System). Il va de soi que tout autre système analogue de positionnement pourrait convenir.

On rappelle également qu'un gyromètre est un dispositif permettant de connaître à chaque instant la position des roues directrices d'un véhicule, et par là même d'estimer la position d'un véhicule.

L'unité de contrôle 5 est en outre reliée à une horloge 15 et à un module d'interface homme/machine 16 destiné à être relié à un écran d'affichage d'informations de guidage 17.

De manière optionnelle, l'unité de contrôle 5 peut en outre être reliée à un module 19 d'interface avec les équipements du véhicule 3, destiné à être reliée respectivement aux bus CAN 21 du véhicule 3.

Le dispositif selon l'invention comprend également un serveur 25 débarqué, c'est-à-dire situé à poste fixe à l'extérieur du véhicule 3.

Ce serveur débarqué 25 comprend un serveur de services 27 relié à un frontal de communications 29, à une horloge 31 et à un serveur de localisation prédictive 33 lui-même relié à une base de données routière 35.

En option, le serveur de services 27 peut en outre être relié à une base de données clients 37.

Le terminal embarquée 1 et le serveur débarqué 25 sont susceptibles d'échanger entre eux des données par l'intermédiaire du modem 13, du frontal de communication 29 et d'un réseau de télécommunications non filaires symbolisé par le trait mixte 39.

Ce réseau peut par exemple être un réseau de téléphonie mobile utilisant l'un des protocoles de communication suivants : GPRS/GSM phase II ou UMTS.

En option, on peut sécuriser les échanges de données entre le terminal embarqué 1 et le serveur débarqué 25.

Le terminal embarqué 1 dispose de préférence d'un système d'exploitation en temps réel supportant quatre logiciels :
- un navigateur permettant d'afficher sur l'écran 17 les informations de guidage transmises, d'exécuter des scripts liés à ces informations, et de proposer un certain nombre de menus utiles pour l'utilisateur lors de la manipulation du terminal ;
- un programme de localisation du véhicule 3, chargé de communiquer avec les moyens de positionnement : GPS et/ou gyromètre 14 ;
- un programme de gestion des communications entre le terminal embarqué 1 et le serveur débarqué 25, chargé d'assurer une bonne interface et le transfert de données entre ce terminal et ce serveur ;
- un programme d'interface entre le terminal embarqué 1 et le véhicule 3, chargé d'écouter les bus CAN 21 présents et de récupérer les données utiles au guidage ainsi que les données utiles au confort d'utilisation de l'écran 17 par le conducteur; ces données comprennent notamment la vitesse du véhicule, l'état des feux de route, etc.

On va à présent décrire le mode de fonctionnement du dispositif selon l'invention.

L'utilisateur commence par formuler une demande de guidage sur le terminal embarqué 1, laquelle demande peut typiquement consister en un nom de lieu à atteindre, tel qu'un nom de rue, et en un critère de sélection d'itinéraire : itinéraire le plus court, le plus rapide, sans autoroute, etc.

Cette demande de guidage est alors transmise à l'unité de contrôle 5 qui transmet alors à l'instant T0 une requête de guidage au module de communication 9, puis au modem 13 et au frontal de communication 29 via le réseau 39.

Cette requête de guidage contient notamment la position du véhicule 3 à l'instant T0 telle qu'elle résulte des informations fournies par le GPS et/ou par le gyromètre 14.

Le serveur de services 29 commence alors par estimer le temps t nécessaire pour traiter la requête de guidage, c'est-à-dire le temps nécessaire pour:
- transmettre la requête de guidage du terminal embarqué 1 vers le serveur débarqué 25,
- générer des données de guidage dans le serveur débarqué 25, et pour
- transmettre ces données de guidage du serveur débarqué 25 vers le terminal embarqué 1.

Ensuite, le serveur de localisation prédictive 33 va estimer la position qu'occupera le véhicule 3 à l'instant T0+t.

Pour ce faire, ce serveur 33 va commencer par reporter les informations de position fournie par le GPS et/ou le gyromètre 14 sur une carte extraite de la base de données routière 35.

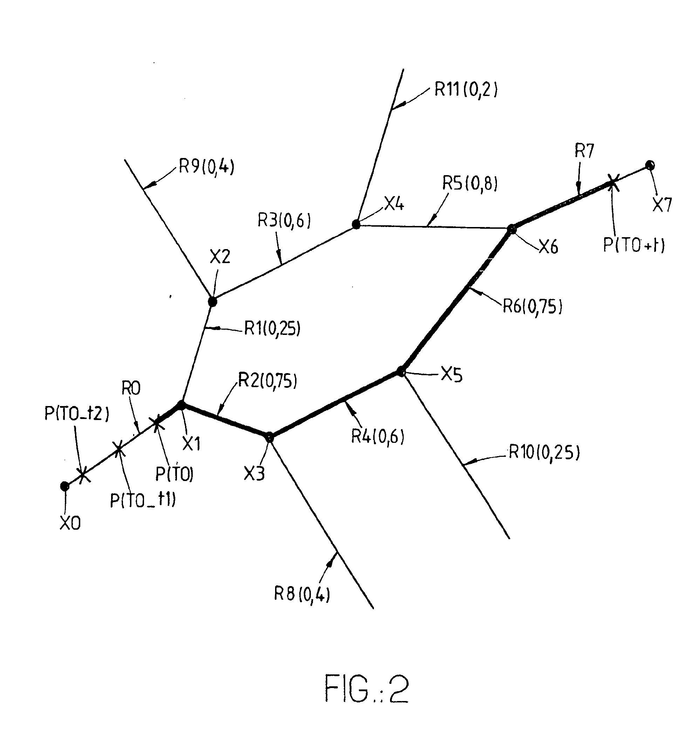

Comme cela est représenté sur la figure 2, l'identification précise du tronçon routier R0 (c'est-à-dire de la portion d'axe routier comprise entre deux intersections X0, X1) sur lequel le véhicule 3 se trouve à l'instant T0 pourra être confirmée à partir des dernières positions P(T0-ti) connues du véhicule 3.

Ensuite, le serveur de localisation prédictive 33 va estimer de manière probabiliste, notamment à partir de données extraites de la base de données routière 35, quels sont les tronçons routiers Ri que le véhicule 3 est susceptible d'emprunter entre l'instant T0 et l'instant T0+t.

Pour ce faire, on pondère l'ensemble des tronçons routiers Ri du réseau routier connexe à la position occupée par le véhicule à l'instant T0.

Cette pondération peut être effectuée selon plusieurs critères.

Tout d'abord, on peut prendre en compte un critère de vitesse.

Ce critère peut être représentatif de la vitesses du véhicule 3 à l'instant T0, des vitesses moyenne et/ou instantanée de la circulation sur chaque tronçon routier Ri, etc.

La pondération selon le critère de vitesse peut être effectuée en attribuant à un tronçon routier Ri donné un poids d'autant plus élevé que sa vitesse de circulation associée est élevée.

On traduit de la sorte le fait qu'un utilisateur a plutôt tendance à emprunter les voies qui circulent le mieux.

On peut également prendre en compte un critère de direction.

Ce critère peut être représentatif de l'orientation de chaque tronçon routier Ri par rapport au cap du véhicule 3 à l'instant T0.

La pondération selon le critère de direction peut être effectuée en attribuant à un tronçon routier Ri donné un poids d'autant plus élevé qu'il est faiblement incliné par rapport au cap du véhicule 3 à l'instant T0.

On traduit de la sorte le fait qu'un utilisateur a plutôt tendance à emprunter les voies qui sont faiblement inclinées par rapport au tronçon routier sur lequel se trouve le véhicule, notamment lorsque l'utilisateur évolue dans une zone qu'il ne connaît pas (ce qui est en l'occurrence le cas, puisqu'on suppose que l'utilisateur est guidé).

On peut également prendre en compte un critère de nature de tronçon routier.

Ce critère peut être représentatif notamment de la largeur de chaque tronçon routier Ri.

La pondération selon le critère de nature de tronçon routier peut être effectuée en attribuant à chaque tronçon routier Ri un poids d'autant plus élevé qu'il est large.

On traduit de la sorte le fait qu'un utilisateur a plutôt tendance à emprunter les voies larges.

On peut également prendre en compte un critère de propagation de probabilité.

Ce critère est représentatif des interconnections qui existent entre les différents tronçons routiers Ri.

Ainsi par exemple, lorsque des premier R5 et deuxième R6 tronçons routiers débouchent dans un même troisième tronçon routier R7 (voir figure 2), il convient d'agréger pour ce troisième tronçon routier les probabilités des premier et deuxième tronçons routiers.

A noter que l'on peut modifier chacune des probabilités susmentionnées en fonction de données extraites de la base de données clients 37, représentatives par exemple du comportement de chaque utilisateur.

Ainsi, pour un utilisateur ayant une conduite sportive et enregistrée comme telle dans la base de données clients 37, on peut imaginer d'accroître le poids des tronçons routiers rapides et/ou larges.

Une fois que l'on a calculé, pour chaque tronçon routier Ri, les probabilités susmentionnées, éventuellement modifiées en fonction de l'historique extrait de la base 37, on détermine l'axe de circulation le plus probable, obtenu en mettant bout à bout chacun des tronçons routiers Ri les plus probables.

Sur la figure 2, on a représenté cet axe en trait fort.

Les chiffres placés entre parenthèses à côté de chaque tronçon Ri donnent des exemples de probabilités associées à chacun de ces tronçons.

On calcule alors le temps nécessaire pour arriver au bout de chaque tronçon routier, c'est-à-dire aux intersections Xi, et on en déduit la position P(T0+t) la plus probable du véhicule 3 à l'instant T0+t.

Une fois que l'on a déterminé cette position, on la reporte sur une carte extraite de la base de données routière 35, et on en engendre des données de guidage fondées sur cette position estimée, puis on transmet ces données au terminal embarqué 1.

En option, on peut envisager de comparer dans le serveur débarqué 25 la position P(T0+t) estimée à l'instant T0+t à la position actuelle telle qu'elle est indiquée par le GPS et/ou le gyromètre 14, et de recalculer cette position estimée tant que sa distance par rapport à la position actuelle dépasse un seuil prédéterminé, de manière à améliorer encore plus la précision du guidage.

Bien entendu, la précision des calculs est d'autant meilleure que les horloges 15, 31 du terminal embarqué 1 et du serveur débarqué 25 sont correctement synchronisées.

Comme on peut le comprendre à la lumière de ce qui précède, le dispositif et le procédé selon l'invention permettent de corriger l'erreur due au fait que le véhicule 3 se déplace entre le moment où le terminal embarqué 1 émet une requête de guidage et le moment où ce terminal embarqué reçoit une réponse de guidage.

On obtient de la sorte une meilleure précision de guidage.

Bien entendu, la présente invention n'est pas limitée au mode de réalisation décrit et représenté, fourni à titre d'exemple illustratif et non limitatif.

## Revendications

1. Procédé d'amélioration de la précision du guidage d'un véhicule (3) par un système du type à terminal embarqué (1) et à serveur débarqué (25), **caractérisé en ce qu'**on estime le temps de traitement (t) d'une requête de guidage émanant dudit terminal embarqué (1), **en ce qu'**on estime une position (P(T0+t)) dudit véhicule correspondant au déplacement de ce véhicule pendant ledit temps de traitement (t), et **en ce qu'**on élabore dans ledit serveur débarqué (25) une réponse de guidage sur la base de ladite position estimée (P(T0+t)).

2. Procédé selon la revendication 1, **caractérisé en ce qu'**on estime ladite position (P(T0+t)) au moyen d'un calcul de probabilité.

3. Procédé selon la revendication 2, **caractérisé en ce qu'**on effectue ledit calcul de probabilité à partir d'au moins l'un des critères choisis dans le groupe comprenant un critère de vitesse, un critère de direction, un critère de nature de tronçon routier et un critère de propagation de probabilité.

4. Procédé selon l'une des revendications 2 ou 3, **caractérisé en ce qu'**on prend on compte, pour effectuer ledit calcul de probabilité, des données représentatives du comportement d'un utilisateur.

5. Procédé selon l'une quelconque des revendications précédentes, **caractérisé en ce qu'**on compare ladite position estimée (P(T0+t)) à la position actuelle dudit véhicule, et **en ce qu'**on recalcule ladite position estimée (P(T0+t)) si sa distance par rapport à ladite position actuelle dépasse un seuil prédéterminé.

6. Dispositif de mise en oeuvre d'un procédé conforme à l'une quelconque des revendications précédentes, comprenant a) un terminal embarqué (1) à bord dudit véhicule (3), susceptible d'élaborer une requête de guidage, b) des moyens embarqués (15) d'indication de la position dudit véhicule (3) interfacés avec ledit terminal embarqué (1), c) au moins un serveur débarqué (25), susceptible d'élaborer une réponse de guidage à partir du report d'une position dudit véhicule sur une carte extraite d'une base de données routière (35), et e) des moyens (13, 29, 39) pour échanger des données entre ledit terminal embarqué (1) et ledit serveur débarqué (25),
**caractérisé en ce qu'**il comprend en outre des moyens (33) pour estimer le temps de traitement (t) de ladite requête de guidage, pour estimer la position (P(T0+t)) dudit véhicule correspondant au déplacement de ce véhicule pendant ledit temps de traitement (t), et pour élaborer ladite réponse de guidage sur la base de ladite position estimée (P(T0+t)).

7. Dispositif selon la revendication 6, **caractérisé en ce que** lesdits moyens embarqués (14) d'indication de position comprennent un récepteur GPS.

8. Dispositif selon l'une des revendications 6 ou 7, **caractérisé en ce qu'**il comprend un gyromètre (14) interfacé avec ledit terminal embarqué (1).

9. Dispositif selon l'une quelconque des revendications 6 à 8, **caractérisé en ce que** ledit terminal embarqué (1) comprend des moyens d'interface (19) avec des équipements (21) dudit véhicule (3).

10. Dispositif selon l'une quelconque des revendications 6 à 9, **caractérisé en ce que** ledit serveur débarqué (25) a en outre accès à une base de données clients (37).

11. Dispositif selon l'une quelconque des revendications 6 à 10, **caractérisé en ce que** ledit terminal embarqué (1) et ledit serveur débarqué (25) comprennent des horloges synchronisées (15, 31).

12. Dispositif selon l'une quelconque des revendications 6 à 11, **caractérisé en ce que** lesdits moyens d'échanges de données (13, 29, 39) sont adaptés pour fonctionner avec un réseau de téléphonie cellulaire (39).

13. Véhicule automobile (3), **caractérisé en ce qu'**il utilise un dispositif conforme à l'une quelconque des revendications 6 à 12.

## Claims

1. Method for improving precision in the guidance of a vehicle (3) by a system of the type with embedded terminal (1) and with remote server (25), **characterized in that** the processing time (t) for a guidance request emanating from said embedded terminal (1) is estimated, **in that** a position (P(T0+t)) of said vehicle corresponding to the displacement of this vehicle during said processing time (t) is estimated, and **in that** a guidance response is generated in said remote server (25) on the basis of said estimated position (P(T0+t)).

2. Method according to Claim 1, **characterized in that** said position (P(T0+t)) is estimated by means of a probability calculation.

3. Method according to Claim 2, **characterized in that** said probability calculation is made on the basis of at least one of the criteria chosen from the group comprising a speed criterion, a direction criterion, a nature of road section criterion and a probability propagation criterion.

4. Method according to one of Claims 2 or 3, **characterized in that**, to make said probability calculation, data representative of the behaviour of a user are taken into account.

5. Method according to any one of the preceding claims, **characterized in that** said estimated position (P(T0+t)) is compared to the current position of said vehicle, and **in that** said estimated position (P(T0+t)) is recalculated if its distance relative to said current position exceeds a predetermined threshold.

6. Device for implementing a method according to any one of the preceding claims, comprising a) an embedded terminal (1) on board said vehicle (3), capable of generating a guidance request, b) embedded means (15) for indicating the position of said vehicle (3) interfaced with said embedded terminal (1), c) at least one remote server (25), capable of generating a guidance response from the report of a position of said vehicle on a map extracted from a road database (35), and e) means (13, 29, 39) for exchanging data between said embedded terminal (1) and said remote server (25),
**characterized in that** it also comprises means (33) for estimating the processing time (t) for said guidance request, for estimating the position (P(T0+t)) of said vehicle corresponding to the displacement of this vehicle during said processing time (t), and for generating said guidance response on the basis of said estimated position (P(T0+t)).

7. Device according to Claim 6, **characterized in that** said position indicating embedded means (14) comprise a GPS receiver.

8. Device according to one of Claims 6 or 7, **characterized in that** it comprises a rate gyro (14) interfaced with said embedded terminal (1).

9. Device according to any one of Claims 6 to 8, **characterized in that** said embedded terminal (1) comprises interface means (19) for interfacing with equipment (21) of said vehicle (3).

10. Device according to any one of Claims 6 to 9, **characterized in that** said remote server (25) also has access to a client database (37).

11. Device according to any one of Claims 6 to 10, **characterized in that** said embedded terminal (1) and said remote server (25) comprise synchronized clocks (15, 31).

12. Device according to any one of Claims 6 to 11, **characterized in that** said data exchange means (13, 29, 39) are designed to operate with a cellular telephony network (39).

13. Motor vehicle (3), **characterized in that** it uses a device according to any one of Claims 6 to 12.

## Patentansprüche

1. Verfahren zur Verbesserung der Präzision der Zielführung eines Fahrzeugs (3) durch ein System von der Art mit Onboard-Endgerät (1) und Offboard-Server (25), **dadurch gekennzeichnet, dass** die Verarbeitungszeit (t) einer vom Onboard-Endgerät (1) kommenden Zielführungsanforderung geschätzt wird, dass eine Position (P(T0+t)) des Fahrzeugs entsprechend der Bewegung dieses Fahrzeugs während der Verarbeitungszeit (t) geschätzt wird, und dass im Offboard-Server (25) eine Zielführungsantwort auf der Basis der geschätzten Position (P(T0+t)) erarbeitet wird.

2. Verfahren nach Anspruch 1, **dadurch gekennzeichnet, dass** die Position (P(T0+t)) mittels einer Wahrscheinlichkeitsrechnung geschätzt wird.

3. Verfahren nach Anspruch 2, **dadurch gekennzeichnet, dass** die Wahrscheinlichkeitsrechnung ausgehend von einem der Kriterien durchgeführt wird, das aus der Gruppe ausgewählt wird, die ein Geschwindigkeitskriterium, ein Richtungskriterium, ein Kriterium der Beschaffenheit des Straßenabschnitts und ein Kriterium der Wahrscheinlichkeitsausbreitung enthält.

4. Verfahren nach einem der Ansprüche 2 oder 3, **dadurch gekennzeichnet, dass** zur Durchführung der Wahrscheinlichkeitsrechnung für das Verhalten eines Benutzers repräsentative Daten berücksichtigt werden.

5. Verfahren nach einem der vorhergehenden Ansprüche, **dadurch gekennzeichnet, dass** die geschätzte Position (P(T0+t)) mit der aktuellen Position des Fahrzeugs verglichen wird, und dass die geschätzte Position (P(T0+t)) neu berechnet wird, wenn ihr Abstand zur aktuellen Position eine Vorbestimmte Schwelle überschreitet.

6. Vorrichtung zur Durchführung eines Verfahrens nach einem der vorhergehenden Ansprüche, die a) ein im Fahrzeugs (3) befindliches Onboard-Endgerät (1), das eine Zielführungsanforderung ausarbeiten kann, b) Onboard-Einrichtungen (15) zur Anzeige der Position des Fahrzeugs (3), die mit dem Onboard-Endgerät (1) kommunizieren, c) mindestens einen Offboard-Server (25), der eine Zielführungsantwort ausgehend von der Übertragung einer Position des Fahrzeugs auf eine Karte erarbeiten, kann, die aus einer Straßendatenbank (35) entnommen wird, und e) Einrichtungen (13, 29, 39) zum Austausch der Daten zwischen dem Onboard-Endgerät (1) und dem Offboard-Server (25) enthält,
**dadurch gekennzeichnet, dass** sie außerdem Einrichtungen (33) zum Schätzen der Verarbeitungszeit (t) der Zielführungsanforderung, zum Schätzen der Position (P(T0+t)) des Fahrzeugs entsprechend der Bewegung dieses Fahrzeugs während der Verarbeitungszeit (t), und zum Ausarbeiten der Zielführungsantwort auf der Basis der geschätzten Position (P(T0+t)) enthält.

7. Vorrichtung nach Anspruch 6, **dadurch gekennzeichnet, dass** die Onboard-Einrichtungen (14) zur Positionsanzeige einen GPS-Empfänger enthalten.

8. Vorrichtung nach einem der Ansprüche 6 oder 7, **dadurch gekennzeichnet, dass** sie ein Gyrometer (14) enthält, das mit dem Onboard-Endgerät (1) kommuniziert.

9. Vorrichtung nach einem der Ansprüche 6 bis 8, **dadurch gekennzeichnet, dass** das Onboard-Endgerät (1) Schnittstelleneinrichtungen (19) mit Ausrüstungen (21) des Fahrzeugs (3) hat.

10. Vorrichtung nach einem der Ansprüche 6 bis 9, **dadurch gekennzeichnet, dass** der Offboard-Server (25) außerdem Zugriff auf eine Kunden-Datenbank (37) hat.

11. Vorrichtung nach einem der Ansprüche 6 bis 10, **dadurch gekennzeichnet, dass** das Onboard-Endgerät (1) und der Offboard-Server (25) synchronisierte Taktgeber (15, 31) enthalten.

12. Vorrichtung nach einem der Ansprüche 6 bis 11, **dadurch gekennzeichnet, dass** die Datenaustauscheinrichtungen (13, 29, 39) geeignet sind, um mit einem zellularen Telefonnetz (39) zu arbeiten.

13. Kraftfahrzeug (3), **dadurch gekennzeichnet, dass** es eine Vorrichtung nach einem der Ansprüche 6 bis 12 verwendet.
